(19) Europäisches Patentamt / European Patent Office / Office européen des brevets

(11) **EP 4 641 673 A1**

(12) **EUROPEAN PATENT APPLICATION**

(43) Date of publication:
**29.10.2025 Bulletin 2025/44**

(21) Application number: **25167795.1**

(22) Date of filing: **01.04.2025**

(51) International Patent Classification (IPC):
*H01M 4/36* $^{(2006.01)}$    *H01M 4/58* $^{(2010.01)}$
*H01M 4/62* $^{(2006.01)}$    *C01B 25/45* $^{(2006.01)}$
*H01M 10/0525* $^{(2010.01)}$    *H01M 10/42* $^{(2006.01)}$

(52) Cooperative Patent Classification (CPC):
**H01M 4/5825; C01B 25/45; H01M 4/366;
H01M 4/625;** H01M 10/0525; H01M 2010/4292

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **22.04.2024 KR 20240053612**

(71) Applicant: SAMSUNG SDI CO., LTD.
Yongin-si, Gyeonggi-do 17084 (KR)

(72) Inventors:
• **KIM, Young-Ki**
 **Yongin-si (KR)**
• **CHOI, Aram**
 **Yongin-si (KR)**
• **KIM, Sangmi**
 **Yongin-si (KR)**
• **DOO, Sungwook**
 **Yongin-si (KR)**
• **KANG, Gwiwoon**
 **Yongin-si (KR)**
• **LEE, Soonrewl**
 **Yongin-si (KR)**

(74) Representative: **Marks & Clerk LLP
15 Fetter Lane
London EC4A 1BW (GB)**

(54) **POSITIVE ELECTRODE ACTIVE MATERIAL AND RECHARGEABLE LITHIUM BATTERY INCLUDING THE SAME**

(57)    A rechargeable lithium battery including a positive electrode active material, the positive electrode active material including a first particle containing a compound represented by Formula 1 and having a first average particle diameter:

Formula 1    $Li_{a1}Mn_{x1}Fe_{y1}B_{z1}PO_{4-b1}$

wherein, in Formula 1 above, $0.8 \leq a1 \leq 1.2$, $0.45 \leq x1 \leq 0.55$, $0.45 \leq y1 \leq 0.55$, $0 < z1 \leq 0.05$, $0 \leq b1 \leq 0.05$, and x1 + y1 + z1 = 1, and B is Mg and Ti.

EP 4 641 673 A1

# FIG. 9

## Description

### BACKGROUND

### 1. Field

Embodiments of the present disclosure described herein are related to a positive electrode active material and a rechargeable lithium battery including the positive electrode active material, and for example, to a positive electrode active material containing an olivine-based lithium compound, and a rechargeable lithium battery including the positive electrode active material.

### 2. Description of Related Art

Recently, with the rapid spread of battery-using electronic devices (such as mobile phones and/or laptop computers), and/or electric vehicles, the demand or desire for rechargeable batteries with relatively high energy density and relatively high capacity has significantly increased. Accordingly, extensive research and development efforts have been directed toward enhancing (improving) performance of recharge batteries, such as rechargeable lithium batteries.

A rechargeable lithium battery includes a positive electrode and a negative electrode, each containing an active material capable of intercalation and deintercalation of lithium ions, along with an electrolyte solution. Electrical energy is generated (produced) by oxidation and reduction reactions as lithium ions are intercalated and deintercalated into/from the positive electrode and the negative electrode.

### SUMMARY

Aspects according to one or more aspects of embodiments are directed toward a positive electrode active material with (having) high energy density, high operating voltage, high conductivity, and high mixture density.

Aspects according to one or more aspects of embodiments are directed toward a rechargeable lithium battery with (having) high energy density, high operating voltage, high charge-discharge efficiency, and long lifespan.

Additional aspects will be set forth in part in the description which follows and, in part, will be apparent from the description, or may be learned by practice of the presented embodiments of the present disclosure.

In one or more embodiments of the present disclosure, a positive electrode active material includes a first particle containing a compound represented by Formula 1, and having a first average particle diameter:

$$\text{Formula 1} \qquad Li_{a1}Mn_{x1}Fe_{y1}B_{z1}PO_{4-b1}$$

In Formula 1 above, $0.8 \leq a1 \leq 1.2$, $0.45 \leq x1 \leq 0.55$, $0.45 \leq y1 \leq 0.55$, $0 < z1 \leq 0.05$, $0 \leq b1 \leq 0.05$, and $x1 + y1 + z1 = 1$ are satisfied, and

B is Mg and Ti.

In one or more embodiments of the present disclosure, a positive electrode active material includes a first particle containing a compound represented by Formula 2 and having a first average particle diameter, and the first particle is doped with Mg and Ti, and a total doping amount of Mg and Ti is about 2500 ppm to about 5000 ppm:

$$\text{Formula 2} \qquad Li_{a2}Mn_{x2}Fe_{y2}PO_{4-b2}$$

In Formula 2, $0.8 \leq a2 \leq 1.2$, $0.45 \leq x2 \leq 0.55$, $0.45 \leq y2 \leq 0.55$, $0 \leq b2 \leq 0.05$, and $x2 + y2 = 1$ are satisfied.

In one or more embodiments of the present disclosure, a rechargeable lithium battery includes a positive electrode having a positive electrode current collector and a positive electrode active material layer on the positive electrode current collector, a negative electrode having a negative electrode current collector and a negative electrode active material layer on the negative electrode current collector, and a separator between the positive electrode and the negative electrode, and a differential capacity (dQ/dV)-voltage charge graph of the rechargeable lithium battery includes a first charge peak (V1) at a voltage of about 3.4 V to about 4.0 V, a first discharge peak (V2) at a voltage of about 3.4 V to about 4.0 V, and a second charge peak (V3) at a voltage of about 4.0 V to about 4.4 V.

At least some of the above and other features of the invention are set out in the claims.

### BRIEF DESCRIPTION OF THE DRAWINGS

The accompanying drawings are included to provide a further understanding of the present disclosure, and are incorporated in and constitute a part of this specification. The drawings illustrate embodiments of the present disclosure and, together with the description, serve to explain principles of disclosure. In the drawings:

FIG. 1 is a conceptual diagram illustrating a rechargeable lithium battery according to one or more embodiments of the present disclosure;

FIGS. 2-5 are schematic views each illustrating a rechargeable lithium battery according to one or more embodiments, FIG. 2 shows a cylindrical battery, FIG. 3 shows a prismatic battery, and FIGS. 4 and 5 show pouch-type (kind) batteries;

FIGS. 6 and 7 are enlarged views each illustrating a positive electrode active material layer of a rechargeable lithium battery according to one or more embodiments of the present disclosure;

FIG. 8 is a flowchart showing a preparation method of a positive electrode active material according to one or more embodiments of the present disclosure;

FIGS. 9 and 10 are scanning electron microscope (SEM) images of positive electrode active materials according to one or more embodiments of the present disclosure;

FIG. 11 is a SEM image of a positive electrode active material according to a comparative example of the present disclosure; and

FIG. 12 is a graph showing a differential capacity for a rechargeable lithium battery according to one or more embodiments of the present disclosure.

## DETAILED DESCRIPTION

In order to fully understand the configuration and effect of disclosure, embodiments of the present disclosure will be described in more detail with reference to the accompanying drawings. The present disclosure may, however, be embodied in one or more suitable forms and should not be construed as being limited to one or more embodiments set forth herein, and one or more suitable changes and modifications can be made. Rather, these embodiments are provided so that this disclosure will be thorough and complete, and will fully convey the scope of the present disclosure to those skilled in the art to which the present disclosure pertains.

In this specification, it will be understood that, if (e.g., when) an element is referred to as being on another element, the element may be directly on the other element or intervening elements may be present therebetween. In the drawings, thicknesses of components are exaggerated for effectively explaining the technical contents. Like reference numerals or symbols refer to like elements throughout, and duplicative descriptions thereof may not be provided the specification.

Embodiments described herein will be explained in more detail with reference to cross-sectional views and/or plan views, which are example illustrations of the present disclosure. In the drawings, thicknesses of films and regions are exaggerated for effectively explaining the technical contents. Accordingly, the regions illustrated in the drawings have schematic properties, and the shapes of the regions illustrated in the drawings are intended to illustrate a specific shape of the regions of the device and are not intended to limit the scope of the present disclosure. In one or more suitable embodiments of the present specification, terms such as first, second, and third are used to describe one or more suitable components, but these components should not be limited by these terms. These terms are merely used to distinguish one component from another. Embodiments described and illustrated herein also include complementary embodiments thereof.

As used herein, the term "and/or" includes any and all combinations of one or more of the associated listed items. As used herein, expressions such as "at least one of", "one of", and "selected from", when preceding a list of elements, modify the entire list of elements and do not modify the individual elements of the list. For example, "at least one of a, b or c", "at least one selected from a, b and c", etc., may indicate only a, only b, only c, both (e.g., simultaneously) a and b, both (e.g., simultaneously) a and c, both (e.g., simultaneously) b and c, all of a, b, and c, or variations thereof.

The terminology used herein is for describing embodiments and is not intended to limit the present disclosure. In this specification, the singular forms are intended to include the plural forms as well, unless the context clearly indicates otherwise. The terms "comprises/includes" and/or "comprising/including" used in this specification do not exclude the presence or addition of one or more other components.

In this specification, "combination thereof" may refer to a mixture, a stack, a composite, a copolymer, an alloy, a blend, and a reaction product of components.

Unless otherwise defined in this specification, a particle diameter may be an average particle diameter. When particles are spherical, "size" or "diameter" indicates a particle diameter or an average particle diameter, and when the particles are non-spherical, the "size" or "diameter" indicates a major axis length or an average major axis length. Also, the particle diameter refers to an average particle diameter ($D_{50}$) which refers to a diameter of particles at a cumulative volume of about 50 vol% in a particle size distribution. The average particle diameter ($D_{50}$) may be measured by a method suitable (known) to those skilled in the art, for example, may be measured by a particle size analyzer, or may also be measured using a transmission electron microscope (TEM) image or a scanning electron microscope (SEM) image. In one or more embodiments, the average particle diameter is measured by a measuring device using dynamic light-scattering, wherein the number of particles is counted for each particle size range by performing data analysis, and an average particle diameter ($D_{50}$) value may then be obtained by calculation therefrom. Also, the average particle diameter may be measured using a laser diffraction method. When measured by the laser diffraction method, specifically, after dispersing particles to be measured in a dispersion medium, the dispersion medium is introduced into a commercial laser diffraction particle size measurement instrument (e.g., Microtrac MT 3000) and irradiated with ultrasonic waves of about 28 kHz at an output of about 60 W, and the average particle diameter ($D_{50}$) based on about 50% of particle size distribution in the measurement instrument may then be calculated.

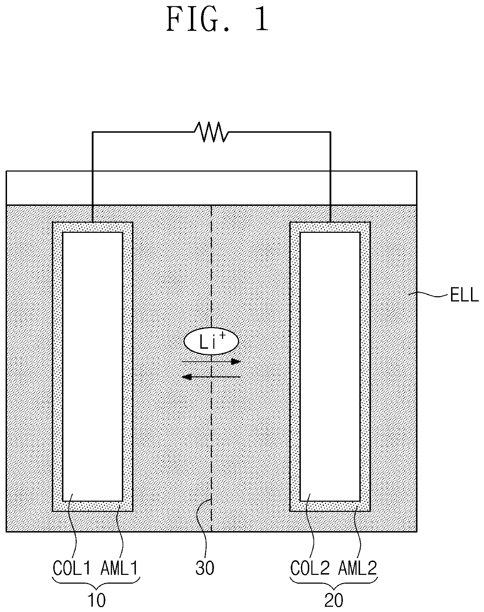

FIG. 1 is a conceptual diagram showing a rechargeable lithium battery according to one or more embodiments of the present disclosure. Referring to FIG. 1, the rechargeable lithium battery may include a positive electrode 10, a negative electrode 20, a separator 30, and an electrolyte solution ELL.

The positive electrode 10 and the negative electrode 20 may be spaced and/or apart (e.g., spaced apart or separated) from each other with the separator 30 therebetween. The separator 30 may be arranged between the positive electrode 10 and the negative electrode 20. The positive electrode 10, the negative electrode 20, and the separator 30 may be in contact with the electrolyte solution ELL. The positive electrode 10, the negative electrode 20, and the separator 30 may be impregnated in the electrolyte solution ELL.

The electrolyte solution ELL may be a medium for transferring lithium ions between the positive electrode 10 and the negative electrode 20. In the electrolyte solution ELL, the lithium ions may move through the separator 30 toward the positive electrode 10 or the negative electrode 20.

**Positive Electrode 10**

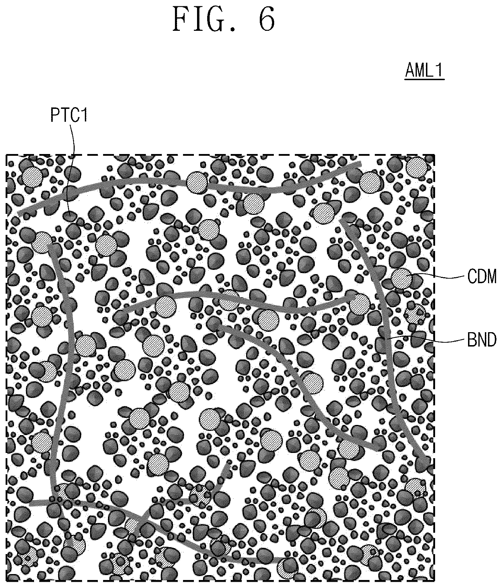

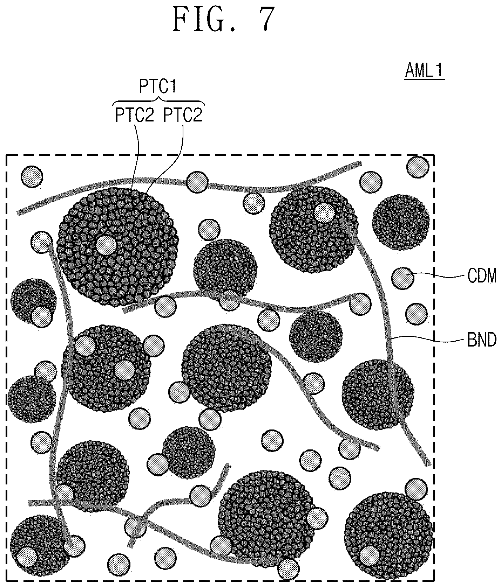

The positive electrode 10 for a rechargeable lithium battery includes a current collector COL1 and a positive electrode active material layer AML1 formed on the current collector COL1. The positive electrode active material layer AML1 may include a positive electrode active material and may further include a binder and/or a conductive material. The positive electrode active material layer AML1 according to one or more embodiments of the present disclosure will be described in more detail with reference to FIGS. 6 and 7. Al may be used as the current collector COL1, but the present disclosure is not limited thereto.

**Negative Electrode 20**

The negative electrode 20 for a rechargeable lithium battery includes a current collector COL2 and a negative electrode active material layer AML2 on the current collector COL2. The negative electrode active material layer AML2 may include a negative electrode active material, and may further include a binder and/or a conductive material (e.g. an electrically conductive material).

For example, the negative electrode active material layer AML2 may include about 90 wt% to about 99 wt% of the negative electrode active material, about 0.5 wt% to about 5 wt% of the binder, and about 0 wt% to about 5 wt% of the conductive material.

The binder may serve to attach the negative electrode active material particles well to each other and also to attach the negative electrode active material well to the current collector COL2. The binder may include a non-aqueous binder, an aqueous binder, a dry binder, and/or a (e.g., any suitable) combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, and/or a (e.g., any suitable) combination thereof.

The aqueous binder may be selected from among a styrene-butadiene rubber, a (meth)acrylated styrene-butadiene rubber, a (meth)acrylonitrile-butadiene rubber, (meth)acrylic rubber, a butyl rubber, a fluoro rubber, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, and/or a (e.g., any suitable) combination thereof.

When an aqueous binder is used as the negative electrode binder, a cellulose-based compound capable of imparting viscosity may be further included. The cellulose-based compound may include at least one of carboxymethyl cellulose, hydroxypropylmethyl cellulose, methyl cellulose, or an alkali metal salt thereof. The alkali metal may include Na, K, or Li.

The dry binder may be a polymer material that is capable of being fibrous. For example, the dry binder may be polytetrafluoroethylene, polyvinylidene fluoride, a polyvinylidene fluoride-hexafluoropropylene copolymer, polyethylene oxide, and/or a (e.g., any suitable) combination thereof.

The conductive material may be used to impart conductivity (e.g. electrical conductivity) to the electrode. Any material that does not cause chemical change (e.g. does not cause an undesirable chemical change in the rechargeable lithium battery) and that conducts electrons can be used in the battery. Non-limiting examples thereof may include a carbon-based material such as natural graphite, artificial graphite, carbon black, acetylene black, ketjen black, a carbon fiber, a carbon nanofiber, and a carbon nanotube; a metal-based material including copper, nickel, aluminium, silver, and/or the like in a form of a metal powder or a metal fiber; a conductive polymer such as a polyphenylene derivative; and/or a (e.g., any suitable) mixture thereof.

The current collector COL2 may include a copper foil, a nickel foil, a stainless-steel foil, a titanium foil, a nickel foam, a copper foam, a polymer substrate coated with a conductive metal, and/or a (e.g., any suitable) combination thereof.

**Negative Electrode Active Material**

The negative electrode active material may include a material that reversibly intercalates/deintercalates lithium ions, a lithium metal, a lithium metal alloy, a material capable of doping/dedoping lithium, or a transition metal oxide.

The material that reversibly intercalates/deintercalates lithium ions may include a carbon-based negative electrode active material, such as, for example, crystalline carbon, amorphous carbon, and/or a (e.g., any suitable) combination thereof. The crystalline carbon may be graphite such as non-shaped, sheet-shaped, flake-shaped, sphere-shaped, or fiber-shaped natural graphite or artificial graphite. The amorphous carbon may be a soft carbon, a hard carbon, a mesophase pitch carbonization product, calcined coke, and/or the like.

The lithium metal alloy includes an alloy of lithium and a metal selected from among Na, K, Rb, Cs, Fr, Be, Mg, Ca, Sr, Si, Sb, Pb, In, Zn, Ba, Ra, Ge, Al, and Sn.

The material capable of doping/dedoping lithium may be a Si-based negative electrode active material or a Sn-based negative electrode active material. The Si-based negative electrode active material may include silicon, a silicon-carbon composite, $SiO_x$ ($0 < x \leq 2$), a Si-Q alloy (where Q is selected from among an alkali metal, an alkaline-earth metal, a Group 13 element, a Group 14 element (excluding Si), a Group 15 element, a Group 16 element, a transition metal, a rare earth element, and/or a (e.g., any suitable) combination thereof). The Sn-based negative electrode active material may include Sn, $SnO_y$ ($0 < y \leq 2$), e.g., $SnO_2$, a Sn-based alloy, and/or a (e.g., any suitable) combination thereof.

The silicon-carbon composite may be a composite of silicon and amorphous carbon. According to one or more embodiments, the silicon-carbon composite may include (e.g., may be in a form of) silicon particles and amorphous carbon coated on the surface of the silicon particles. For example, the silicon-carbon composite may include a secondary particle (core) in which primary silicon particles are agglomerated (e.g., be in a secondary particle form), and an amorphous carbon coating layer (shell) on the surface of the secondary particle. The amorphous carbon may also be between the primary silicon particles, and for example, the primary silicon particles may be coated with the amorphous carbon. The secondary particle may exist dispersed in an amorphous carbon matrix.

The silicon-carbon composite may further include crystalline carbon. For example, the silicon-carbon composite may include a core including crystalline carbon and silicon particles and an amorphous carbon coating layer on a surface of the core.

The Si-based negative electrode active material or the Sn-based negative electrode active material may be used in combination with a carbon-based negative electrode active material.

**Separator 30**

Depending on the type (kind) of the rechargeable lithium battery, the separator 30 may be present between the positive electrode 10 and the negative electrode 20. The separator 30 may include polyethylene, polypropylene, polyvinylidene fluoride, or a multilayer film of two or more layers thereof, and a mixed multilayer film such as a polyethylene/polypropylene two-layer separator, polyethylene/polypropylene/polyethylene three-layer separator, polypropylene/polyethylene/polypropylene three-layer separator, and/or the like.

The separator 30 may include a porous substrate and a coating layer including an organic material, an inorganic material, and/or a (e.g., any suitable) combination thereof on a surface (e.g., one or both surfaces (e.g., opposite surfaces)) of the porous substrate.

The porous substrate may be a polymer film formed of any one selected from among polyolefin such as polyethylene and polypropylene, polyester such as polyethylene terephthalate and polybutylene terephthalate, polyacetal, polyamide, polyimide, polycarbonate, polyether ketone, polyarylether ketone, polyetherimide, polyamideimide, polybenzimidazole, polyethersulfone, polyphenylene oxide, a cyclic olefin copolymer, polyphenylene sulfide, polyethylene naphthalate, a glass fiber, TEFLON, and polytetrafluoroethylene, or a copolymer or mixture of two or more thereof.

The organic material may include a polyvinylidene fluoride-based polymer or a (meth)acrylic polymer.

The inorganic material may include inorganic particles selected from among $Al_2O_3$, $SiO_2$, $TiO_2$, $SnO_2$, $CeO_2$, MgO, NiO, CaO, GaO, ZnO, $ZrO_2$, $Y_2O_3$, $SrTiO_3$, $BaTiO_3$, $Mg(OH)_2$, boehmite, and/or a (e.g., any suitable) combination thereof, but the present disclosure is not limited thereto.

The organic material and the inorganic material may be mixed in one coating layer, or a coating layer including an organic material and a coating layer including an inorganic material may be stacked.

**Electrolyte Solution ELL**

The electrolyte solution ELL for a rechargeable lithium battery may include a non-aqueous organic solvent and a lithium salt.

The non-aqueous organic solvent may serve as a medium for transmitting ions taking part in the electrochemical reaction of a battery.

The non-aqueous organic solvent may be a carbonate-based, ester-based, ether-based, ketone-based, or alcohol-based solvent, an aprotic solvent, and/or a (e.g., any suitable) combination thereof.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and/or the like.

The ester-based solvent may include methyl acetate, ethyl acetate, n-propyl acetate, dimethyl acetate, methyl propionate, ethyl propionate, decanolide, mevalonolactone, valerolactone, caprolactone, and/or the like.

The ether-based solvent may include dibutyl ether, tetraglyme, diglyme, dimethoxyethane, 2-methyltetrahydrofuran, 2,5-dimethyltetrahydrofuran, tetrahydrofuran, and/or the like. In one or more embodiments, the ketone-based solvent may include cyclohexanone, and/or the like. The alcohol-based solvent may include ethanol, isopropyl alcohol, and/or the like, and the aprotic solvent may include nitriles such as R-CN (wherein R is a C2 to C20 linear, branched, or cyclic hydrocarbon group, a double bond, an aromatic ring, or an ether bond), and/or the like; amides such as dimethylformamide; dioxolanes such as 1,3-dioxolane, 1,4-dioxolane, and/or the like; sulfolanes, and/or the like.

The non-aqueous organic solvents may be used alone or in combination of two or more.

In one or more embodiments, if (e.g., when) using a carbonate-based solvent, a cyclic carbonate and a chain carbonate may be mixed and used, and the cyclic carbonate and the chain carbonate may be mixed in a volume ratio of about 1:1 to about 1:9.

The lithium salt dissolved in the organic solvent supplies lithium ions in a battery, enables a basic operation of a rechargeable lithium battery, and improves transportation of the lithium ions between positive and negative electrodes. Examples of the lithium salt include at least one selected from among $LiPF_6$, $LiBF_4$, $LiSbF_6$, $LiAsF_6$, $LiClO_4$, $LiAlO_2$, $LiAlCl_4$, $LiPO_2F_2$, LiCl, LiI, $LiN(SO_3C_2F_5)_2$, $Li(FSO_2)_2N$ (lithium bis(fluorosulfonyl)imide, LiFSI), $LiC_4F_9SO_3$, $LiN(C_xF_{2x+1}SO_2)(C_yF_{2y+1}SO_2)$ (wherein x and y are integers of 1 to 20), lithium trifluoromethane sulfonate, lithium tetrafluoroethanesulfonate, lithium difluoro(oxalato)borate (LiDFOB), lithium difluorobis(oxalato)phosphate (LiDFBOP), and lithium bis(oxalato) borate (LiBOB).

**Rechargeable Lithium Battery**

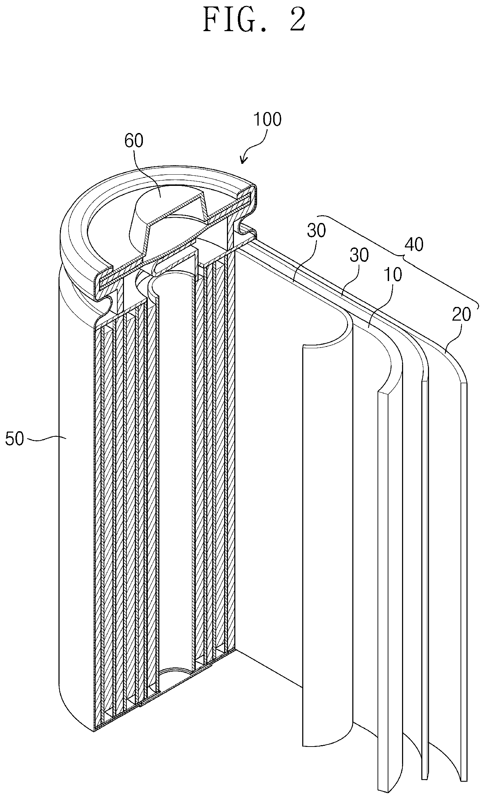

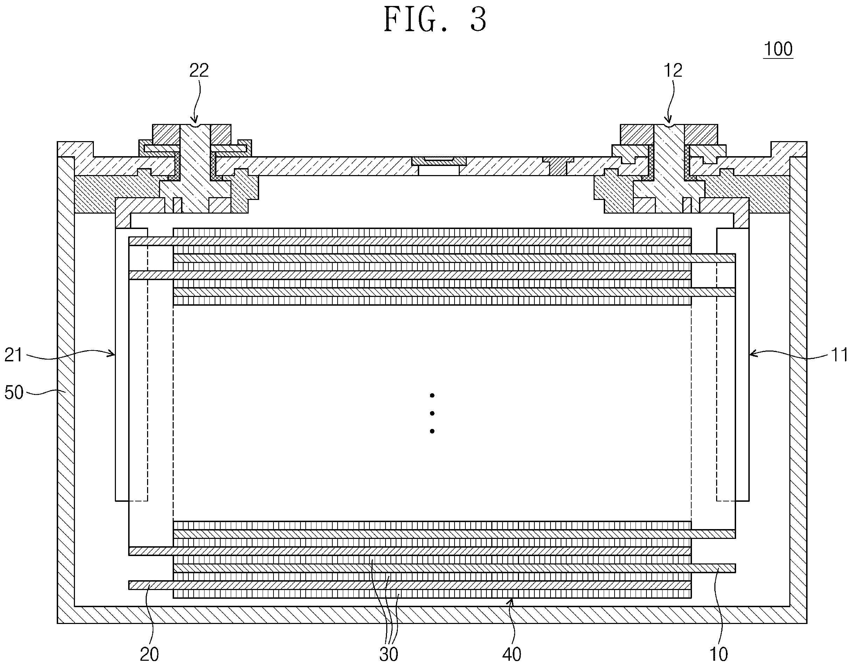

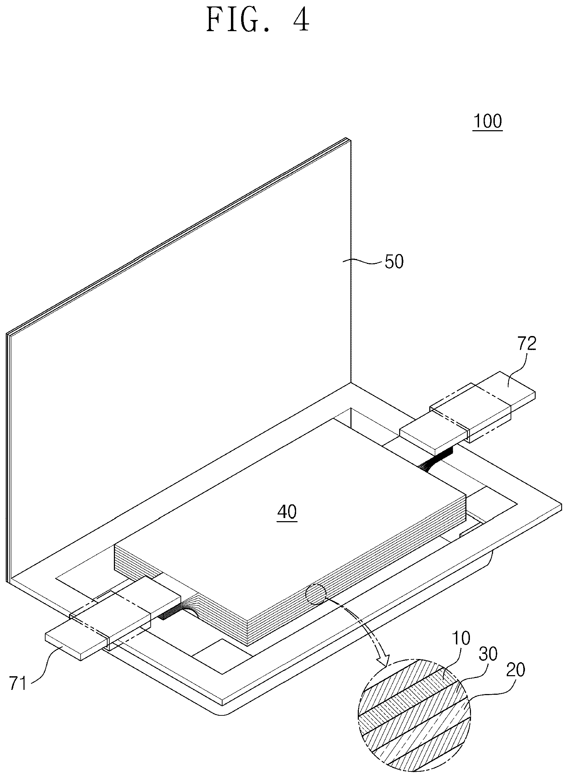

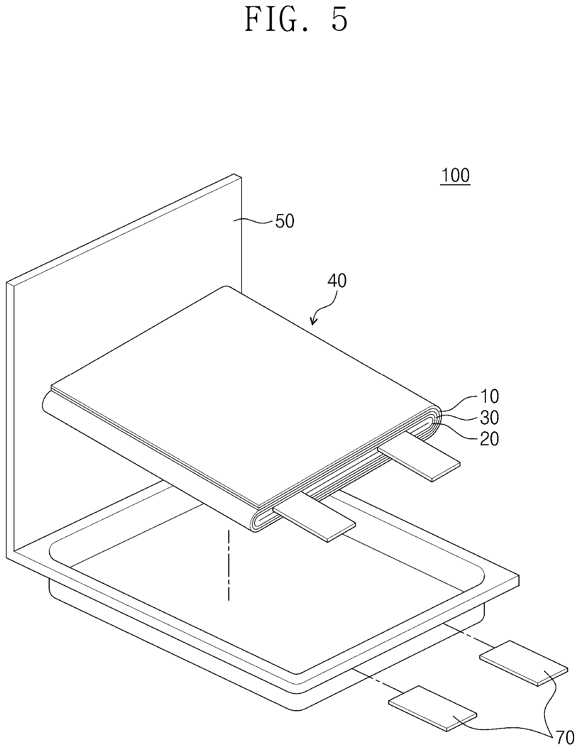

The rechargeable lithium battery may be classified into cylindrical, prismatic, pouch, or coin-type (kind) batteries, and/or the like depending on their shape. FIGS. 2 to 5 are schematic views each illustrating a rechargeable lithium battery according to one or more embodiments. FIG. 2 shows a cylindrical battery, FIG. 3 shows a prismatic battery, and FIGS. 4 and 5 show pouch-type (kind) batteries. Referring to FIGS. 2 to 5, the rechargeable lithium battery 100 may include an electrode assembly 40 including a separator 30 between a positive electrode 10 and a negative electrode 20, and a case 50 in which the electrode assembly 40 is included. The positive electrode 10, the negative electrode 20, and the separator 30 may be impregnated with an electrolyte solution. The rechargeable lithium battery 100 may include a sealing member 60 sealing the case 50, as shown in FIG. 2. In FIG. 3, the rechargeable lithium battery 100 may include a positive lead tab 11, a positive terminal 12, a negative lead tab 21, and a negative terminal 22. As shown in FIGS. 4 and 5, the rechargeable lithium battery 100 may include an electrode tab 70, which may be, for example, a positive electrode tab 71 and a negative electrode tab 72 serving as an electrical path for inducing the current formed in the electrode assembly 40 to the outside.

The rechargeable lithium battery according to one or more embodiments may be applied to automobiles, mobile phones, and/or one or more suitable types (kinds) of electric devices, as non-limiting examples.

FIGS. 6 and 7 are enlarged views of a positive electrode active material layer of a rechargeable lithium battery according to one or more embodiments of the present disclosure. Referring to FIGS. 6 and 7, as previously described, the positive electrode active material layer AML1 (see FIG. 1) may include a first particle PTC1, a conductive material CDM, and a binder BND. A plurality of first particles PTC1 may constitute a positive electrode active material according to one or more embodiments of the present disclosure.

The positive electrode active material layer AML1 may further include an additive that may serve as a sacrificial positive electrode.

An amount of the positive electrode active material PTC1 in the positive electrode active material layer AML1 may be about 90 wt% to about 99.5 wt% with respect to 100 wt% of the positive electrode active material layer AML1. An amount of each of the binder BND and the conductive material (e.g., electron conductor) CDM may be about 0.5 wt% to about 5 wt% with respect to 100 wt% of the positive electrode active material layer AML1.

The binder BND may bind the first particle PTC1 and the conductive material CDM to each other. For example, the binder BND may include at least one selected from among the group consisting of polyvinyl alcohol, carboxymethyl cellulose, hydroxypropyl cellulose, diacetyl cellulose, polyvinylchloride, carboxylated polyvinylchloride, polyvinylfluoride, a polymer including ethylene oxide, polyvinylpyrrolidone, polyurethane, polytetrafluoroethylene, polyvinylidene fluoride, polyethylene, polypropylene, styrene-butadiene rubber, (meth)acrylated styrene-butadiene rubber, an epoxy resin, a (meth)acrylic resin, a polyester resin, and nylon, but one or more embodiments of the present disclosure is not limited thereto.

The conductive material CDM may be used to improve conductivity of the positive electrode active material layer AML1. Any conductive material that does not cause chemical changes of the positive electrode active material layer AML1 may be used, without limitation, as the conductive material CDM. Examples of the conductive material CDM may include a carbon-based material such as natural graphite, artificial graphite, carbon black, acetylene black, ketjen black, a carbon fiber, a carbon nanofiber, and carbon nanotube; a metal-based material containing copper, nickel, aluminium, silver, and/or the like, in a form of a metal powder or a metal fiber; a conductive polymer such as a polyphenylene derivative; and/or a (e.g., any suitable) mixture thereof.

Hereinafter, the first particle PTC1 will be described in more detail.

**First Particle PTC1**

The first particle PTC1 may include an olivine-based lithium compound represented by Formula 1.

$$\text{Formula 1} \qquad Li_{a1}Mn_{x1}Fe_{y1}B_{z1}PO_{4-b1}$$

In Formula 1 above, $0.8 \leq a1 \leq 1.2$, $0.45 \leq x1 \leq 0.55$, $0.45 \leq y1 \leq 0.55$, $0 < z1 \leq 0.05$, $0 \leq b1 \leq 0.05$, and $x1 + y1 + z1 = 1$ are satisfied. B is Mg and Ti and may be the dopants doped into the first particle PTC1. For example, $0.45 < x1 < 0.55$ may be satisfied, or x1 may be 0.5. At least one of Mg or Ti may control the sizes of primary particles to be substantially uniform, thereby improving charge-discharge efficiency and low-temperature and lifespan characteristics of a rechargeable lithium battery. The primary particle will be described in more detail as follows.

For example, the first particle PTC1 may include a compound represented by Formula 2, and may be doped with Mg and Ti:

$$\text{Formula 2} \qquad Li_{a2}Mn_{x2}Fe_{y2}PO_{4-b2}$$

In Formula 2, $0.8 \leq a2 \leq 1.2$, $0.45 \leq x2 \leq 0.55$, $0.45 \leq y2 \leq 0.55$, $0 \leq b2 \leq 0.05$, and $x2 + y2 = 1$ is satisfied. For example, $0.45 < x2 < 0.55$ may be satisfied, or x2 may be 0.5.

A doping amount of B, which is a total doping amount of Mg and Ti, may be about 2500 ppm to about 5000 ppm, about 4000 ppm to about 5000 ppm, or about 4600 ppm. The doping amount of B may be defined as the weight of the doping element with respect to the total weight of metals other than lithium (i.e., Fe, Mn and B) of the olivine-based lithium compound represented by Formula 1 above. That is, the doping amount of B may be the weight of the doping element with respect to the total weight of metals excluding lithium (e.g., not including lithium) in the olivine-based lithium compound represented by Formula 1.

The doping amount of Mg may be about 1000 ppm to about 2400 ppm, or about 2400 ppm. The doping amount of Mg may be defined as the weight of the doping element (Mg) with respect to the total weight of metals other than lithium (i.e., Fe, Mn, Mg and Ti) of the olivine-based lithium compound represented by Formula 1 above. That is, the doping amount of Mg may be the weight of the doping element with respect to the total weight of metals excluding lithium (e.g., not including lithium) of the olivine-based lithium compound represented by Formula 1 above. For example, the doping amount may be analyzed using methods such as X-ray fluorescence analysis (XRF), energy-dispersive X-ray analysis (EDX), inductively coupled plasma mass spectrometry (ICP-MS), inductively coupled plasma optical emission spectrometry (ICP-OES), X-ray diffraction analysis (XRD), and nuclear magnetic resonance (NMR), and so like.

The doping amount of Ti may be about 2000 ppm. The doping amount of Ti may be defined as the weight of the doping element (Ti) with respect to the total weight of metals other than lithium (i.e., Fe, Mn, Ti and Mg) of the olivine-based lithium compound represented by Formula 1 above. That is, the doping amount of Ti may be the weight of the doping element with respect to the total weight of metals excluding lithium (e.g., not including lithium) of the olivine-based lithium compound represented by Formula 1 above.

The ratio of the doping amount of Mg to the doping amount of Ti (doping amount of Mg/doping amount of Ti) may be about 0.3 to about 1.2, about 0.5 to about 1.2, or about 1.2.

When the doping amounts of Mg and Ti and the ratio of the doping amount of Mg to the doping amount of Ti fall within the above-described ranges, respectively, charge-discharge efficiency and low-temperature and lifespan characteristics of a rechargeable lithium battery may be improved.

In one or more embodiments, the first particle PTC1 may include a coating layer on a surface thereof. The coating layer may cover the entire surface of the first particle PTC1, or may cover a portion of the surface of the first particle PTC1. For example, the coating layer may include carbon and/or a carbon-containing compound. The first particle PTC1 may have improved structural stability and electrical conductivity due to the coating layer. That is, the coating layer may improve the structural stability and electrical conductivity of the first particle PTC1.

The coating layer may further include at least one selected from among the group consisting of a titanium-containing compound, a magnesium-containing compound, and a vanadium-containing compound. A metal-containing compound, such as the titanium-containing compound, the magnesium-containing compound, and the vanadium-containing compound, may be, for example, a metal oxide, a metal hydroxide, a metal carbonate, or a composite or mixture thereof. The metal-containing compound may further include another metal or non-metal element. For example, the metal-containing compound may further include lithium.

The first particle PTC1 may further include carbon from (e.g., derived from) the coating layer that was previously described. An amount of carbon element in the first particle PTC1 may be about 0.5 wt% to about 10 wt%, about 1 wt% to about 3 wt%, or about 1.5 wt% to about 2.5 wt% based on a total of 100 wt% of the first particle PTC1.

Because the positive electrode active material according to one or more embodiments of the present disclosure includes the first particle PTC1, mixture density, capacity, and energy density may be improved. In one or more embodiments, the mixture (pellet) density of the positive electrode active material, according to one or more embodiments of the present disclosure, may be about 2.0 g/cc to about 2.5 g/cc, or about 2.3 g/cc to about 2.4 g/cc.

The first particle PTC1 has a first average particle diameter. The first average particle diameter may vary according to one or more embodiments, for example, of FIG. 6 or FIG. 7.

In one or more embodiments, referring back to FIG. 6, the first particle PTC1 may have a single particle form. In this specification, the single particle may refer to one particle that exists alone without a grain boundary therein. In terms of morphology, the single particle may refer to one particle, a monolith structure, a single unitary structure, or a non-aggregated (e.g., non-agglomerated) particle, existing as an independent phase in which particles do not aggregate with each other. For example, the single particle may be a single crystal. In one or more embodiments, the single particle may be a particle containing a few crystals. The single particle may be independently separated. In one or more embodiments, the single particle may be in a form of having about 2 to about 100 single particles attached (e.g., bound) to each other. For example, the first particle PTC1 may be provided in one or more suitable sizes. The average particle diameter of the first particle PTC1 may be about 100 nm to about 2 $\mu$m, or about 500 nm to about 2 $\mu$m. For example, the average particle diameter of the first particle PTC1 may be about 1 $\mu$m. The minimum particle diameter of the first particle PTC1 may be about 20 nm to about 500 nm, or about 200 nm to about 300 nm. For example, the minimum particle diameter may refer to a value obtained by measuring diameters of about 30 primary particles (hereinafter, first primary particle) randomly selected from among an electron micrograph of a positive electrode active material. Hereinafter, the average particle diameter of the first particle PTC1 will be described in more detail.

When the first particle PTC1 is a single particle, the average particle diameter of the first particle PTC1 may be about 100 nm to about 2 $\mu$m, or about 500 nm to about 2 $\mu$m. For example, the average particle diameter of the first particle PTC1 may be about 1 $\mu$m. In one or more embodiments, the average particle diameter may be measured with a particle size analyzer. The average particle diameter may refer to a diameter ($D_{50}$) of particles at a cumulative volume of about 50 vol% in a particle size distribution.

In another one or more embodiments, referring back to FIG. 7, the first particle PTC1 may be in a form of a polycrystal, and may include a secondary particle in which at least two primary particles are aggregated (e.g., agglomerated). For example, one first particle PTC1 may include a plurality of second particles PTC2 that are aggregated (e.g., agglomerated) with each other. The second particles PTC2 may each be a primary particle. The first particle PTC1 may have a sphere or oval shape.

In one or more embodiments, the first particle PTC1 may further include a grain boundary coating layer on surfaces of the second particles PTC2. The grain boundary coating layer may be present inside the first particle PTC1. The grain boundary coating layer may be formed along an interface between the second particles PTC2 inside the first particle PTC1. That is, the second particle PTC2 inside the first particle PTC1 may be separated or spaced apart from each other by the grain boundary coating layer. For example, the grain boundary coating layer may refer to a material applied to the grain boundary inside the first particle PTC1. The grain boundary coating layer may include carbon and/or a carbon-containing compound. The grain boundary coating layer may further include at least one selected from among the group consisting of a titanium-containing compound, a magnesium-containing compound, and a vanadium-containing compound.

In one or more embodiments, the first particle PTC1 may have a single particle form, which refers to a particle that exists alone without a grain boundary. Morphologically, a single particle is a monolithic structure, a single unitary structure, or a non-aggregated particle existing independently without aggregation. It can be a single crystal or a particle containing a few crystals, and may range in size from about 100 nm to 2 $\mu$m. Alternatively, the first particle PTC1 may be in a secondary particle form, which is a polycrystal structure where multiple primary particles (second particles PTC2) are aggregated. These secondary particles typically have a spherical or oval shape and may include a grain boundary (interface) coating layer that separates the primary particles within the secondary particle. The grain boundary coating layer can include carbon, titanium-containing compounds, magnesium-containing compounds, and vanadium-containing compounds, enhancing the structural stability and electrical conductivity of the secondary particle.

The inside of the first particle PTC1 may refer to an entire inner region of the first particle PTC1 excluding the surface of the first particle PTC1. For example, the inside of the first particle PTC1 may refer to an entire inner region from about 10 nm depth from the outer surface of the first particle PTC1, or a region from about 10 nm depth to about 2 $\mu$m depth. For example, in one or more embodiments, this inner region starts from about 10 nm below the outer surface and can extend up to about 2 $\mu$m in depth.

Because the first particle PTC1 may further include a grain boundary coating part, structural stability may be strengthened, and a coating layer may be formed uniformly (e.g., substantially uniformly) on the surface of the first particle PTC1. In one or more embodiments, because the first particle PTC1 may further include the grain boundary coating part, the electrical conductivity of the first particle PTC1 may be further improved.

The first particle PTC1 may further include carbon from (e.g., derived from) the above-described coating layer and/or grain boundary coating layer. An amount of carbon element in the first particle PTC1 may be about 0.5 wt% to about 10 wt%, about 1 wt% to about 3 wt%, or about 1.5 wt% to about 2.5 wt% based on a total of 100 wt% of the first particle PTC1.

When the first particle PTC1 is a secondary particle, the average particle diameter of the first particle PTC1 may be about 2 $\mu$m to about 15 $\mu$m, about 3 $\mu$m to about 10 $\mu$m, or about 3 $\mu$m to about 7 $\mu$m. For example, the average particle diameter of the first particle PTC1 may be about 5 $\mu$m. The average particle diameter of the first particle PTC1 may be larger than the average particle diameter of the second particle PTC2 to be described in more detail later. In one or more embodiments, the average particle diameter may be measured with a particle size analyzer. The average particle diameter may refer to a diameter ($D50$) of particles at a cumulative volume of about 50 vol% in a particle size distribution.

The second particle PTC2 may have a particle diameter of about 200 nm or less. For example, the particle diameter of the second particle PTC2 may be about 10 nm to about 200 nm, about 20 nm to about 200 nm, about 50 nm to about 200 nm, or about 100 nm to about 200 nm. In one or more embodiments, the particle diameter may refer to a value obtained by measuring diameters of about 30 second particles PTC2 randomly selected from among an electron micrograph of a positive electrode active material. The second particles PTC2 may have a substantially uniform particle diameter. The particle diameter of the second particle PTC2 may be smaller than the particle diameter of the first primary particle. For example, the particle diameter of the second particle PTC2 may be about 100 nm smaller than the particle diameter of the first primary particle.

When the average particle diameters of the first particle and the second particle fall within the above-described ranges, respectively, and the second particles have a substantially uniform size, the rechargeable lithium battery including the same may have improved charge-discharge capacity and low-temperature capacity.

The first particle PTC1 may have a sphere shape in which the nano-sized second particles PTC2 are aggregated (e.g., agglomerated). With the second particles PTC2 being closely aggregated (e.g., agglomerated) with each other, the first particle PTC1 may have the following characteristics. The first particle PTC1 may have a sphere or an oval shape. The average particle diameter ($D_{50}$) of the first particle PTC1 may be about 2 $\mu$m to about 15 $\mu$m. The first particle PTC1 may have a porosity of about 20% to about 40%. Here, porosity (n) may be defined as the pore volume (Vp) divided by the total volume (Vt) of particles, or

$$ n = \frac{V_p}{V_t}. $$

For example, the porosity may be measured using adsorptive gases such as nitrogen with the BELSORP (BET equipment) from BEL JAPAN, or by methods such as mercury intrusion porosimetry, and so like.

The span value ($\frac{D_{90} - D_{10}}{D_{50}}$), obtained by analysis on the first particle PTC1 with a particle size analyzer, may be about 0.3 to about 0.75.

The rechargeable lithium battery (see FIG. 1) including the positive electrode active material according to one or more embodiments of the present disclosure, previously described, may have an average voltage of about 3.5 V to about 3.7 V, or about 3.6 V if (e.g., when) it is discharged with about 0.1 C at a voltage in a range of about 2.5 V to about 4.25 V.

In addition, the rechargeable lithium battery including the positive electrode active material, according to one or more embodiments of disclosure, may have improved lifespan characteristics. For example, at a voltage of about 2.5 V to about 4.25 V, a capacity retention rate after 50 cycles of charging and discharging with a constant current of about 1.0 C may be at least about 99%, or about 99.7% to about 100%.

A differential capacity (dQ/dV)-voltage charge graph for the rechargeable lithium battery according to one or more embodiments of the present disclosure includes a first charge peak (V1), a first discharge peak (V2), and a second charge peak (V3).

The first charge peak (V1) is at a voltage of about 3.4 V to about 4.0 V, for example, about 3.4 V to about 3.6 V, or about 3.48 V to about 3.53 V. The first discharge peak (V2) is at a voltage of about 3.4 V to about 4.0 V, for example, about 3.4 V to about 3.5 V, or about 3.46 V to about 3.49 V. The second charge peak (V3) is at a voltage of about 4.0 V to about 4.4 V, for example, about 4.0 V to about 4.2 V, or about 4.08 to about 4.10 V.

For example, the maximum peak voltage of the first charge peak (V1) may be at a voltage of about 3.4 V to about 3.6 V, or about 3.49 V to about 3.53 V. The maximum peak voltage of the first discharge peak (V2) may be at a voltage of about 3.4 V to about 3.6 V, or about 3.48 V to about 3.49 V. The maximum peak voltage of the second charge peak (V3) may be at a voltage of about 4.0 V to about 4.2 V, or about 4.099 V to about 4.110 V. The maximum peak voltage may be defined as a voltage at which a peak has the highest intensity or greatest value.

The ratio ($I_{V2}/I_{V1}$) of the intensity of the first discharge peak to the intensity of the first charge peak may be about 0.986 to about 0.991, or about 0.987 to about 0.990. For example, an amount of manganese (Mn) in the positive electrode active material may be about 52 mol% or less. For example, in Formula 1, x1 may be about 0.4 to about 0.52 (e.g. 0.45 to about 0.52), and in Formula 2, x2 may be about 0.4 to about 0.52 (e.g. 0.45 to about 0.52).

The ratio ($I_{V3}/I_{V1}$) of the intensity of the second charge peak to the intensity of the first charge peak may be about 1.17 or less, or about 1.164 to about 1.166. For example, the amount of manganese (Mn) in the positive electrode active material may be about 52 mol% or less. For example, in Formula 1, x1 may be about 0.4 to about 0.52 (e.g. 0.45 to about 0.52), and in Formula 2, x2 may be about 0.4 to about 0.52 (e.g. 0.45 to about 0.52).

## Positive Electrode Active Material Slurry

A positive electrode active material slurry according to one or more embodiments of the present disclosure may include the first particle PTC1, the conductive material CDM, the binder BND, previously described, and a solvent. Hereinafter, for the convenience of description, the same contents as those described with reference to FIGS. 6 and 7 are not provided, and the differences are mainly described in more detail.

In one or more embodiments, the positive electrode active material slurry may have a viscosity of about 7000 mPa·s or less. For example, the viscosity of the positive electrode active material slurry may be about 1000 mPa·s to about 7000 mPa·s, about 2000 mPa·s to about 6000 mPa·s, or about 3000 mPa·s to about 4000 mPa·s. When the viscosity of the positive electrode active material slurry falls within the above-described ranges, a positive electrode active material layer AML1 may be easily bound to a current collector COL1.

For example, if (e.g., when) the first particle PTC1 is a secondary particle, the positive electrode active material slurry, according to one or more embodiments of the present disclosure, may have a desired or suitable viscosity while containing solids in a large amount. For example, the positive electrode active material slurry may contain about 60% to about 70% solids. A total solid content (e.g., amount) may refer to a converted value to percentage of the weight of a solid material, remaining after solvent evaporation (that is, a dried mixture and current collector), with respect to the total weight of the current collector with the positive electrode active material slurry being applied in preparation of an electrode. The solids may include a positive electrode active material, a binder, and a conductive material. When the total solid content (e.g., amount) falls within the above-described range, the first particle PTC1 may have excellent or suitable binding force for an electrode current collector.

The first particle PTC1 may be bound to the current collector COL1 (see FIG. 1), and the binder BND may increase binding force between the first particle PTC1 and the current collector COL1 (see FIG. 1).

For example, if (e.g., when) the first particle PTC1 is a single particle, the positive electrode active material slurry, according to one or more embodiments of disclosure, may include a large amount of the binder BND in preparation of a full cell. For example, because the first particle PTC1 has a substantially small first average particle diameter, the amount of the binder BND in the positive electrode active material layer AML1 may be large in order to secure binding force in a desired or suitable range between the first particle PTC1 and the current collector COL1 (see FIG. 1) in manufacture of the full cell. For example, the amount of the binder BND may be about 2 wt% to about 5 wt%, or about 3 wt% to about 5 wt% with respect to 100 wt% of the positive electrode active material layer AML1.

For example, if (e.g., when) the first particle PTC1 is a secondary particle, the positive electrode active material slurry according to one or more embodiments of the present disclosure may include a small amount of the binder BND in preparation of a full cell. For example, because the first particle PTC1 has a large first average particle diameter, the amount of the binder BND in the positive electrode active material layer AML1 may be relatively small in order to secure binding force in a desired or suitable range between the first particle PTC1 and the current collector COL1 (see FIG. 1) in manufacture of the full cell. For example, the amount of the binder BND may be about 0.5 wt% to about 3 wt%, or about 0.5 wt% to about 2 wt% with respect to 100 wt% of the positive electrode active material layer AML1. For example, in the manufacture of the full cell, smaller amount of the binder BND may be desired or required if (e.g., when) the first particle PTC1 is a secondary particle than if (e.g., when) the first particle PTC1 is a single particle. Accordingly, resistance of the rechargeable lithium battery, including the first particle PTC1 that is a secondary particle, may be reduced.

**Preparation Method of Positive Electrode Active Material**

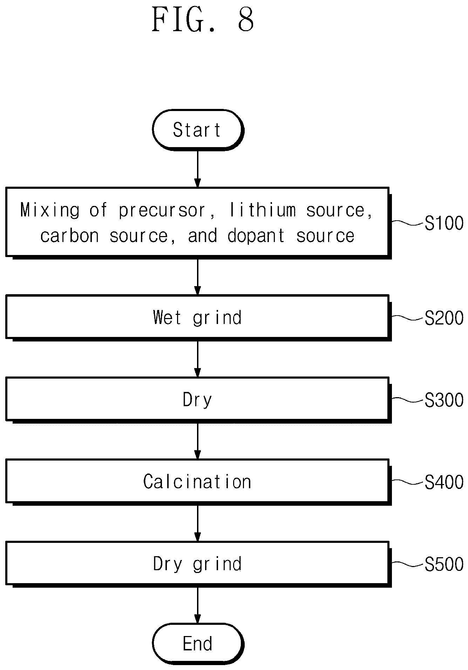

FIG. 8 is a flowchart showing a preparation method of a positive electrode active material according to one or more embodiments of the present disclosure. Referring to FIG. 8, preparation of a first particle PTC1 according to one or more embodiments of the present disclosure will be described in more detail.

A manganese iron phosphate precursor, a lithium source, a carbon source, and a dopant source may be added to a solvent and mixed (S100). For example, the solvent may be water, ethanol, and/or the like.

The manganese iron phosphate precursor may be a compound containing all of manganese (Mn), iron (Fe), and phosphorus (P); a mixture of a manganese (Mn)-containing compound and an iron (Fe) and phosphorus (P)-containing compound; and/or a (e.g., any suitable) mixture of a manganese (Mn)-containing compound, an iron (Fe)-containing compound, and a phosphorus (P)-containing compound. For example, the manganese iron phosphate precursor may include $Mn_xFe_{1-x}PO_4 \cdot H_2O$; a mixture of $MnCO_3$ and $FePO_4 \cdot H_2O$; and/or a (e.g., any suitable) mixture of $MnCO_3$, $FeSO_4$, and $H_3PO_4$. Here, x may be about 0.2 to about 0.8 (e.g. about 0.45 to about 0.55).

The lithium source may include at least one selected from among the group consisting of lithium oxide, lithium hydroxide, lithium chloride, lithium nitrate, lithium nitrite, lithium formate, lithium acetate, lithium oxalate, lithium carbonate, lithium phosphate, dilithium hydrogen phosphate, lithium dihydrogen phosphate, and lithium citrate.

The carbon source may include at least one selected from among the group consisting of glucose, sucrose, fructose, cellulose, starch, citric acid, polyacrylic acid, polyethylene glycol, and dopamine.

The dopant source may include a dopant metal-containing oxide and/or a dopant metal-containing chloride. For example, the dopant source may include at least one selected from among the group consisting of a Mg-containing oxide, a Mg-containing chloride, a Ti-containing oxide, and a Ti-containing chloride in Formula 1 above. For example, the dopant source may include at least one of the Mg-containing oxide or the Mg-containing chloride, and at least one of the Ti-containing oxide or the Ti-containing chloride.

Wet grinding may be performed on the mixture (S200). For the wet grinding, a suitable wet mill capable of temperature control may be used. In particular, at least one selected from among a beads mill, a ball mill, an attrition mill, an apex mill, a super mill, and a basket mill may be used for the wet grinding. Through the wet grinding process, particles in the mixture may be ground to a fine size.

According to one or more embodiments of the present disclosure, the wet grinding (S200) may also not be provided. In particular, in order to maximize or increase the average particle diameter of the first particle PTC1 to be finally prepared, the wet grinding (S200) of precursor particles may also not be provided.

The solvent may be removed from the mixture to form a dried mixture (S300).

When preparing the first particle PTC1 in FIG. 6, according to one or more embodiments of the present disclosure, the forming of the dried mixture may include performing direct evaporation on the mixture. For example, the direct evaporation may include static drying or spray drying.

When preparing the first particle PTC1 in FIG. 7, according to one or more embodiments of the present disclosure, the forming of the dried mixture may include performing the spray drying on the mixture. A generally used spray-drying device may be used for the spray drying. For example, the spray drying may be performed by using at least one selected from among an ultrasonic spray-drying device, an air nozzle spray-drying device, an ultrasonic nozzle spray-drying device, a filter expansion droplet-generating device, and an electrostatic spray-drying device.

The particles, finely reduced to a size of a primary particle after the wet grinding process, may be aggregated (e.g., agglomerated) with each other through the spray drying process to thereby form a secondary particle. Therefore, by adjusting the flow amount and flow rate of carrier gas, temperature, the residence time in a reactor, internal pressure, and/or the like during the spray drying process, the first particle PTC1 may be formed into the secondary particle of a desired or suitable size.

In one or more embodiments, the mixture to be spray-dried may have a total solid content (e.g., amount) (TSC) of about 20% to about 40%. The total solid content (e.g., amount) may refer to a converted value to percentage of the weight of a solid material remaining after solvent evaporation (that is, dried mixture) with respect to the total weight of the mixture (that is, spray liquid). For example, the spray liquid may have a total solid content (e.g., amount) of about 30 wt%.

When the total solid content (e.g., amount) is less than about 20%, disadvantages may include that an average particle diameter of the first particle PTC1 decreases and productivity is reduced. When the total solid content (e.g., amount) is greater than about 40%, adjusting the average particle diameter of the first particle PTC1 may become difficult, and a size difference between the first particles PTC1 may increase.

The spray liquid according to this embodiment may have a viscosity of about 1500 mPa·s to about 2500 mPa·s with the above-mentioned total solid content (e.g., amount). For example, the spray liquid may have a viscosity of about 2000 mPa·s.

In one or more embodiments, an input rate for spray drying may be about 0.1 kg/min to about 0.9 kg/min. The input rate for spray drying may be defined as the weight of a solvent and raw material mixture added per minute. In one or more embodiments, the input rate for spray drying according to one or more embodiments of the present disclosure may be about 0.5 kg/min.

In one or more embodiments, the spray drying may be performed at a temperature of about 100 °C to about 300 °C. For example, the spray drying may be performed at a temperature of about 200 °C to about 300 °C, at a temperature higher than about 200 °C and lower than or equal to about 300 °C, or at a temperature of about 230 °C to about 270 °C. Spray gas (for example, air), used for the spray drying, may be injected at a first temperature, and discharged at a second temperature. For example, the first temperature may be about 200 °C to about 250 °C. The second temperature may be about 80 °C to about 150 °C.

The spray liquid may have an input pressure of about 0.3 MPa to about 0.7 MPa. For example, the input pressure of the spray liquid may be about 0.5 MPa.

When the input rate, the input pressure, and the temperature for the spray drying fall within the above-described ranges, respectively, the first particle PTC1 may have a sphere shape and a desired or suitable porosity.

The spray liquid for the spray drying may have a flow rate of about 30 mL/min to about 80 mL/min. When the flow rate is less than about 30 mL/min, disadvantages of nozzle clogging, reduced productivity, and/or the like may be caused. When the flow rate is greater than about 80 mL/min, due to moisture condensation in the spray-drying device, the mixture may not be dried completely. The spray liquid may have an input pressure of about 0.3 MPa to about 0.7 MPa. For example, the input pressure of the spray liquid may be about 0.5 MPa.

The dried mixture may be calcined in an inert atmosphere (S400). The inert atmosphere may be a nitrogen atmosphere and/or an argon atmosphere. The temperature at which the calcination process is performed may be about 500 °C to about 1000 °C, or about 600 °C to about 800 °C. The execution time of the calcination process may be about 4 hours to about 20 hours, or about 6 hours to about 12 hours. As the dried mixture is calcined, the first particle PTC1 containing the compound represented by Formula 1, previously described, may be formed.

Dry grinding may be performed on the calcined first particle PTC1 (S500). The calcined mixture may be ground using an air jet mill, and/or the like.

In preparation of the first particle PTC1 in FIG. 6, according to one or more embodiments of the present disclosure, the calcined mixture may be ground at a rotation speed of at least about 7000 rpm. For example, the calcined mixture may be ground at a rotation speed of about 7000 rpm to about 10000 rpm, or about 7500 rpm to about 9000 rpm. Accordingly, the first particle PTC1 may have a form of the single particle as illustrated in FIG. 6.

In preparation of the first particle PTC1 in FIG. 7, according to one or more embodiments of the present disclosure, the calcined mixture may be ground at a rotation speed of about 0 rpm to about 7000 rpm. For example, the calcined mixture may be ground at a rotation speed of about 4000 rpm to about 7000 rpm, about 4000 rpm to about 6000 rpm, or about 4500 rpm to about 5000 rpm. Unlike the preparation of the positive electrode active material in FIG. 6, the grinding after calcination (S500) may be performed under relatively mild conditions. In the preparation of the positive electrode active material in FIG. 7, for example, the dry grinding (S500) may also not be provided. When the rotation speed in the grinding (S500) falls within the above-mentioned ranges, the first particle PTC1 may be maintained to have a form of a secondary particle. Accordingly, the first particle PTC1 may have a form of the secondary particle as illustrated in FIG. 7.

In the preparation of the first particle PTC1 in FIG. 7, according to one or more embodiments of the present disclosure, a carbon source may be introduced to an iron phosphate precursor to form a carbon coating layer uniformly (e.g., substantially uniformly) on surfaces of primary particles. Thereafter, the primary particles may be closely aggregated (e.g., agglomerated) through the spray drying to form a dense sphere-shaped secondary particle. As a result, the first particle PTC1 may include the stable carbon coating layer in the outside and inside of the first particle PTC1, and may thus have a relatively high carbon content (e.g., amount). Due to the high carbon content (e.g., amount) of the first particle PTC1 in FIG. 7, the positive electrode active material layer AML1 may have improved conductivity.

Analysis on a carbon element according to one or more embodiments of the present disclosure may be performed using an Elementar Micro Cube elemental analyzer. The specific operation method and conditions are as follows. A sample of about 1 to 2 mg is weighed in a tin cup, placed in an automatic sampling tray and introduced into a combustion tube through a ball valve, and the combustion is carried out at a combustion temperature of about 1000 °C. Subsequently, reduction of the combustion gas using reduced copper is carried out to form carbon dioxide. Carbon dioxide was detected using a thermal conductivity detector (TCD).

Scanning electron microscope-energy dispersive X-ray spectroscopy (SEM-EDS) and quantitative analyses on a particle surface were conducted to measure the carbon content (e.g., amount) according to one or more embodiments of the present disclosure. In addition to SEM-EDS, inductively coupled plasma-mass spectrometry (ICP-MS), inductively coupled plasma optical emission spectroscopy (ICP-OES), and/or the like may be used to measure the carbon content (e.g., amount).

Hereinafter, the present disclosure will be described in more detail with reference to examples. However, the following examples are merely presented to illustrate the present disclosure, and the scope of the present disclosure is not limited thereto.

## Example 1: Preparation of First Particle in Form of Single Particle

A manganese iron phosphate precursor ($Mn_{0.5}Fe_{0.5}PO_4$), lithium carbonate, magnesium dioxide, and titanium dioxide were added to water in a molar ratio of (Mn+Fe):Li:Mg:Ti of about 1:1.03:0.01:0.004. 10 wt% of glucose was further added to the mixture. Wet grinding was performed on the mixture by ball milling. The mixture was dried over evaporation on a tray by heating, and then dried in a vacuum oven at about 85 °C for about 4 hours. The dried mixture was calcined in a nitrogen atmosphere at about 650 °C for about 10 hours. The calcined product was ground at a rotation speed of about 8000 rpm to obtain a first particle in the form of a single particle. The formula of the first particle was about $LiMn_{0.5}Fe_{0.5}PO_4$, the doping amount of Mg was about 2400 ppm, and the doping amount of Ti was about 2000 ppm.

## Example 2: Preparation of First Particle in Form of Secondary Particle

A manganese iron phosphate precursor ($Mn_{0.5}Fe_{0.5}PO_4$), lithium carbonate, magnesium dioxide, and titanium dioxide were added to water in a molar ratio of (Mn+Fe):Li:Mg:Ti of about 1:1.03:0.01:0.004. 10 wt% of glucose was further added to the mixture. The slurry mixture was dried over evaporation, through spray drying, under conditions of a spray pressure of about 0.5 MPa and a temperature of about 230 °C. The dried mixture was calcined in a nitrogen atmosphere at about 750 °C and for about 10 hours to obtain a first particle in the form of a secondary particle. The formula of the first particle was about $LiMn_{0.5}Fe_{0.5}PO_4$, the doping amount of Mg was about 2400 ppm, and the doping amount of Ti was about 2000 ppm.

In other words, Example 1 describes the preparation of a single particle, while Example 2 details the preparation of a secondary particle, both with the same chemical composition but different processing methods. In Example 1, a manganese iron phosphate precursor ($Mn_{0.5}Fe_{0.5}PO_4$), lithium carbonate, magnesium dioxide, and titanium dioxide were mixed in water in a molar ratio of (Mn+Fe):Li:Mg:Ti of about 1:1.03:0.01:0.004, with 10 wt% glucose added. The mixture underwent wet grinding by ball milling, followed by drying through evaporation on a heated tray and in a vacuum oven at about 85 °C for 4 hours. The dried mixture was then calcined in a nitrogen atmosphere at about 650 °C for 10 hours. The calcined product was ground at about 8000 rpm to obtain a single particle with the formula $LiMn_{0.5}Fe_{0.5}PO_4$, containing about 2400 ppm of Mg and about 2000 ppm of Ti. In Example 2, the same precursor mixture was dried through spray drying at about 0.5 MPa and 230 °C, then calcined in a nitrogen atmosphere at about 750 °C for 10 hours to obtain a secondary particle with the same chemical composition.

## Comparative Example 1: Preparation of First Particle in Form of Single Particle

The first particle was prepared in substantially the same manner as that of Example 1 except that a manganese iron phosphate precursor ($Mn_{0.6}Fe_{0.4}PO_4$), lithium carbonate, magnesium dioxide, and titanium dioxide were added in a molar ratio of (Mn+Fe):Li:Mg:Ti of about 1:1.03:0.0025:0.004, the formula of the first particle was about $LiMn_{0.6}Fe_{0.4}PO_4$, and the doping amount of Mg was about 600 ppm.

## Comparative Example 2: Preparation of First Particle in Form of Single Particle

The first particle was prepared in substantially the same manner as that of Example 1 except that a manganese iron phosphate precursor ($Mn_{0.55}Fe_{0.45}PO_4$), lithium carbonate, magnesium dioxide, and titanium dioxide were added in a molar ratio of (Mn+Fe):Li:Mg:Ti of about 1:1.03:0.0025:0.004, the formula of the first particle was about $LiMn_{0.55}Fe_{0.45}PO_4$, and the doping amount of Mg was about 600 ppm.

## Comparative Example 3: Preparation of First Particle in Form of Single Particle

The first particle was prepared in substantially the same manner as that of Example 1 except that a manganese iron phosphate precursor ($Mn_{0.5}Fe_{0.5}PO_4$), lithium carbonate, magnesium dioxide, and titanium dioxide were added in a molar ratio of (Mn+Fe):Li:Mg:Ti of about 1:1.03:0.0025:0.004, the formula of the first particle was about $LiMn_{0.5}Fe_{0.5}PO_4$, and the doping amount of Mg was about 600 ppm.

## Comparative Example 4: Preparation of First Particle in Form of Single Particle

The first particle was prepared in substantially the same manner as that of Example 1 except that a manganese iron phosphate precursor ($Mn_{0.45}Fe_{0.55}PO_4$), lithium carbonate, magnesium dioxide, and titanium dioxide were added in a molar ratio of (Mn+Fe):Li:Mg:Ti of about 1:1.03:0.0025:0.004, the formula of the first particle was about $LiMn_{0.45}Fe_{0.55}PO_4$, and the doping amount of Mg was about 600 ppm.

**Comparative Example 5: Preparation of First Particle in Form of Single Particle**

The first particle was prepared in substantially the same manner as that of Example 1 except that a manganese iron phosphate precursor ($Mn_{0.4}Fe_{0.6}PO_4$), lithium carbonate, magnesium dioxide, and titanium dioxide were added in a molar ratio of (Mn+Fe):Li:Mg:Ti of about 1:1.03:0.0025:0.004, the formula of the first particle was about $LiMn_{0.4}Fe_{0.6}PO_4$, and the doping amount of Mg was about 600 ppm.

**Comparative Example 6: Preparation of First Particle in Form of Single Particle**

The first particle was prepared in substantially the same manner as that of Example 1 except that a manganese iron phosphate precursor ($Mn_{0.5}Fe_{0.5}PO_4$) and lithium carbonate were added in a molar ratio of (Mn+Fe):Li of about 1:1.03 and the formula of the first particle was about $LiMn_{0.5}Fe_{0.5}PO_4$.

**Comparative Example 7: Preparation of First Particle in Form of Single Particle**

The first particle was prepared in substantially the same manner as that of Example 1 except that a manganese iron phosphate precursor ($Mn_{0.5}Fe_{0.5}PO_4$), lithium carbonate, and magnesium dioxide were added in a molar ratio of (Mn+Fe):Li:Mg of about 1:1.03:0.0025, the formula of the first particle was about $LiMn_{0.5}Fe_{0.5}PO_4$, and the doping amount of Mg was about 600 ppm.

**Comparative Example 8: Preparation of First Particle in Form of Single Particle**

The first particle was prepared in substantially the same manner as that of Example 1 except that a manganese iron phosphate precursor ($Mn_{0.5}Fe_{0.5}PO_4$), lithium carbonate, and titanium dioxide were added in a molar ratio of (Mn+Fe):Li:Ti of about 1:1.03:0.004, the formula of the first particle was about $LiMn_{0.5}Fe_{0.5}PO_4$, and the doping amount of Ti was about 2000 ppm.

**Comparative Example 9: Preparation of First Particle in Form of Single Particle**

The first particle was prepared in substantially the same manner as that of Example 1 except that a manganese iron phosphate precursor ($Mn_{0.5}Fe_{0.5}PO_4$), lithium carbonate, magnesium dioxide, and titanium dioxide were added in a molar ratio of (Mn+Fe):Li:Mg:Ti of about 1:1.03:0.02:0.004, the formula of the first particle was about $LiMn_{0.5}Fe_{0.5}PO_4$, and the doping amount of Mg was about 4800 ppm.

**Comparative Example 10: Preparation of First Particle in Form of Secondary Particle**

The first particle was prepared in substantially the same manner as that of Example 2 except that a manganese iron phosphate precursor ($Mn_{0.5}Fe_{0.5}PO_4$) and lithium carbonate were added in a molar ratio of (Mn+Fe):Li of about 1:1.03 and the formula of the first particle was about $LiMn_{0.5}Fe_{0.5}PO_4$.

**Comparative Example 11: Preparation of First Particle in Form of Secondary Particle**

The first particle was prepared in substantially the same manner as that of Example 2 except that a manganese iron phosphate precursor ($Mn_{0.5}Fe_{0.5}PO_4$), lithium carbonate, and magnesium dioxide were added in a molar ratio of (Mn+Fe):Li:Mg of about 1:1.03:0.0025, the formula of the first particle was about $LiMn_{0.5}Fe_{0.5}PO_4$, and the doping amount of Mg was about 600 ppm.

**Comparative Example 12: Preparation of First Particle in Form of Secondary Particle**

The first particle was prepared in substantially the same manner as that of Example 2 except that a manganese iron phosphate precursor ($Mn_{0.5}Fe_{0.5}PO_4$), lithium carbonate, and titanium dioxide were added in a molar ratio of (Mn+Fe):Li:Ti of about 1:1.03:0.004, the formula of the first particle was about $LiMn_{0.5}Fe_{0.5}PO_4$, and the doping amount of Ti was about 2000 ppm.

**Comparative Example 13: Preparation of First Particle in Form of Secondary Particle**

The first particle was prepared in substantially the same manner as that of Example 2 except that a manganese iron phosphate precursor ($Mn_{0.4}Fe_{0.6}PO_4$), lithium carbonate, magnesium dioxide, and titanium dioxide were added in a molar ratio of (Mn+Fe):Li:Mg:Ti of about 1:1.03:0.01:0.004.

**Comparative Example 14: Preparation of First Particle in Form of Secondary Particle**

The first particle was prepared in substantially the same manner as that of Example 2 except that a manganese iron phosphate precursor ($Mn_{0.6}Fe_{0.4}PO_4$), lithium carbonate, magnesium dioxide, and titanium dioxide were added in a molar ratio of (Mn+Fe):Li:Mg:Ti of about 1:1.03:0.01:0.004.

**Preparation of Positive Electrode**

95 wt% of a final positive electrode active material, 3 wt% of a polyvinylidene fluoride binder, and 2 wt% of a carbon black conductive material were mixed in an N-methylpyrrolidone solvent to prepare a positive electrode active material slurry. The positive electrode active material slurry was applied to an aluminium current collector and dried, and then rolling was performed to prepare a positive electrode.

**Manufacture of Rechargeable Lithium Battery**

The prepared positive electrode and a lithium metal counter electrode, as a counter electrode, were used to prepare a 2032-type (kind) coin half-cell. A separator (thickness: about 16 $\mu$m) formed of a porous polyethylene (PE) film was interposed between the positive electrode and the lithium metal counter electrode, and an electrolyte solution was introduced to manufacture a rechargeable lithium battery. The electrolyte solution obtained by mixing $LiPF_6$ of 1.3 M in a mixed solvent containing ethylene carbonate (EC), ethylmethyl carbonate (EMC), and dimethyl carbonate (DMC) in a volume ratio of about 3:4:3 was used as an electrolyte.

Table 1

| Classificati on | Form | Formula 2 | Doping | |
|---|---|---|---|---|
| | | | Doping amount of Mg (ppm) | Doping amount of Ti (ppm) |
| Example 1 | Single particle | $LiMn_{0.5}Fe_{0.5}PO_4$ | 2400.0 | 2000 |
| Example 2 | Secondary particle | $LiMn_{0.5}Fe_{0.5}PO_4$ | 2400.0 | 2000 |
| Comparati ve Example 1 | Single particle | $LiMn_{0.6}Fe_{0.4}PO_4$ | 600.0 | 2000 |
| Comparati ve Example 2 | Single particle | $LiMn_{0.55}Fe_{0.45}PO_4$ | 600.0 | 2000 |
| Comparati ve Example 3 | Single particle | $LiMn_{0.5}Fe_{0.5}PO_4$ | 600.0 | 2000 |
| Comparati ve Example 4 | Single particle | $LiMn_{0.45}Fe_{0.55}PO_4$ | 600.0 | 2000 |
| Comparati ve Example 5 | Single particle | $LiMn_{0.4}Fe_{0.6}PO_4$ | 600.0 | 2000 |
| Comparati ve Example 6 | Single particle | $LiMn_{0.5}Fe_{0.5}PO_4$ | 0 | 0 |
| Comparati ve Example 7 | Single particle | $LiMn_{0.5}Fe_{0.5}PO_4$ | 600 | 0 |
| Comparati ve Example 8 | Single particle | $LiMn_{0.5}Fe_{0.5}PO_4$ | 0 | 2000 |
| Comparati ve Example 9 | Single particle | $LiMn_{0.5}Fe_{0.5}PO_4$ | 4800 | 2000 |
| Comparati ve Example 10 | Secondary particle | $LiMn_{0.5}Fe_{0.5}PO_4$ | 0 | 0 |
| Comparati ve Example 11 | Secondary particle | $LiMn_{0.5}Fe_{0.5}PO_4$ | 600 | 0 |
| Comparati ve Example 12 | Secondary particle | $LiMn_{0.5}Fe_{0.5}PO_4$ | 0 | 2000 |
| Comparati ve Example 13 | Secondary particle | $LiMn_{0.4}Fe_{0.6}PO_4$ | 2400 | 2000 |
| Comparati ve Example 14 | Secondary particle | $LiMn_{0.6}Fe_{0.4}PO_4$ | 2400 | 2000 |

**Evaluation Example 1: Surface Analysis of Positive Electrode Active Material**

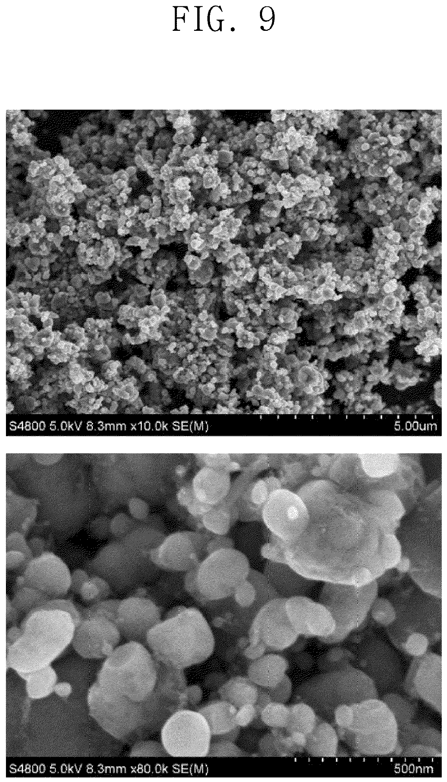

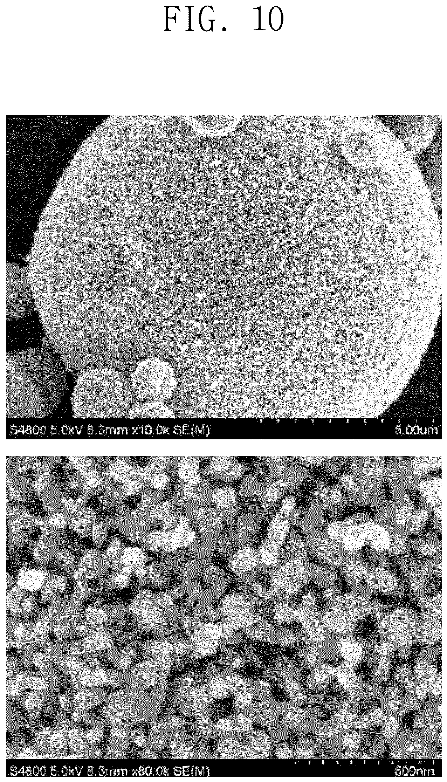

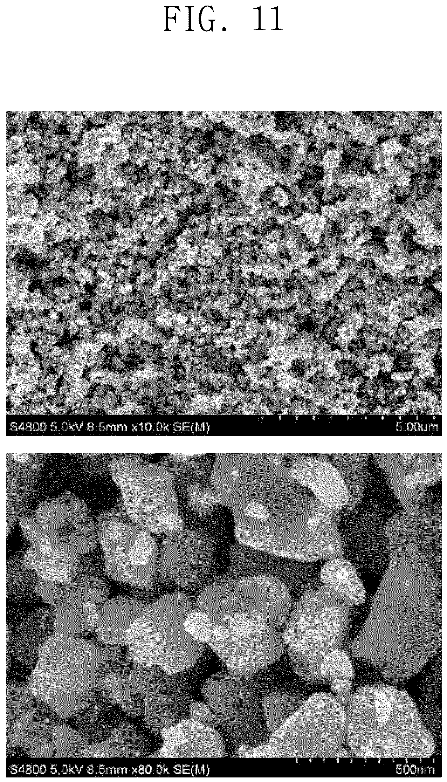

FIG. 9 shows a scanning electron microscope (SEM) image of the first particle prepared according to Example 1. FIG. 10 shows a SEM image of the first particle prepared according to Example 2. FIG. 11 shows a SEM image of the first particle prepared according to Comparative Example 1.

Referring to FIGS. 9 and 11, it can be seen that the first particles according to Example 1 and Comparative Example 1 of the present disclosure have a form of a fine single particle. Referring to FIG. 10, it can be seen that the first particle according to Example 2 of the present disclosure has a form of a sphere-shaped secondary particle in which a plurality of primary particles is aggregated (e.g., agglomerated). It can be seen that the second particle PTC2 according to Example 2 of present disclosure has a form of a fine nano-sized single particle. In one or more embodiments, referring to FIGS. 9 and 10, the primary particle PTC2 according to Example 2 was smaller than the primary particle according to Example 1, and was substantially uniform.

**Evaluation Example 2: Evaluation on Active Material**

The pellet densities (PD) of the positive electrode active materials according to Examples 1 and 2 and Comparative Examples 1 to 14 were measured, and the results were listed in Table 2.

Table 2

| Classification | Pellet density (g/cc) |
| --- | --- |
| Example 1 | 2.33 |
| Example 2 | 2.34 |
| Comparative Example 1 | 2.35 |
| Comparative Example 2 | 2.34 |
| Comparative Example 3 | 2.36 |
| Comparative Example 4 | 2.32 |
| Comparative Example 5 | 2.35 |
| Comparative Example 6 | 2.35 |
| Comparative Example 7 | 2.36 |
| Comparative Example 8 | 2.34 |
| Comparative Example 9 | 2.35 |
| Comparative Example 10 | 2.36 |
| Comparative Example 11 | 2.33 |
| Comparative Example 12 | 2.34 |
| Comparative Example 13 | 2.35 |
| Comparative Example 14 | 2.36 |

**Evaluation Example 3: Evaluation on Differential Capacity**

Differential capacities for rechargeable batteries prepared using the positive electrode active materials according to Examples 1 and 2, and Comparative Examples 4, 5, and 13 were evaluated. The rechargeable lithium battery was charged and discharged with about 0.2 C one time, and then the charging and discharging cycle was repeated two times in substantially the same manner. The results are shown in Table 3.

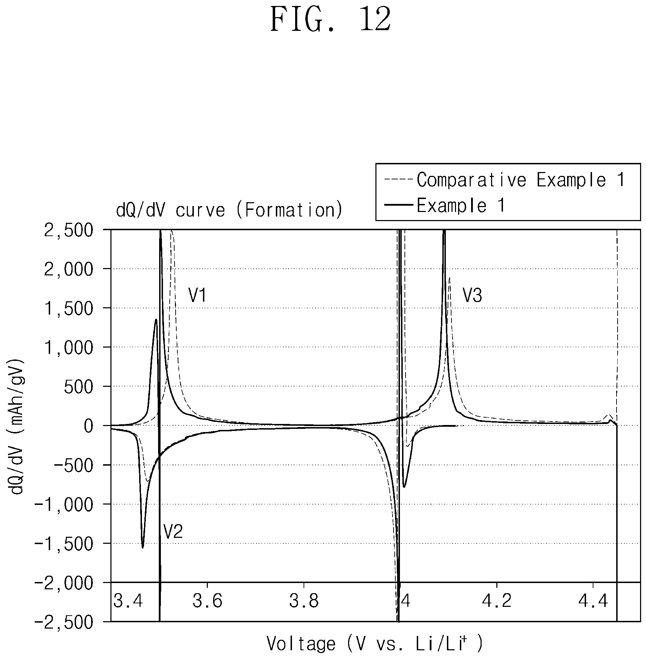

Respective values of maximum peak voltages ($V_{max,V1}$, $V_{max,V2}$, and $V_{max,V3}$) of a first charge peak (V1), a first discharge peak (V2), and a second charge peak (V3), and the ratios of intensities of the peaks ($I_{V2}/I_{V1}$ and $I_{V3}/I_{V1}$) were listed in Table 3. FIG. 12 is a graph showing differential capacity (dQ/dV)-voltage charge curves measured one time according to Example 1 and Comparative Example 1.

Table 3

| Classification | Example 1 | Example 2 | Comparative Example 4 | Comparative Example 5 | Comparative Example 13 |
|---|---|---|---|---|---|
| $V_{max,V1}$ | 3.526 | 3.516 | 3.498 | 3.486 | 3.499 |
| $V_{max,V2}$ | 3.481 | 3.481 | 3.478 | 3.465 | 3.479 |
| $V_{max,V3}$ | 4.103 | 4.099 | 4.095 | 4.086 | 4.091 |
| $I_{V2}/I_{V1}$ | 0.987 | 0.990 | 0.994 | 0.994 | 0.994 |
| $I_{V3}/I_{V1}$ | 1.164 | 1.166 | 1.171 | 1.172 | 1.169 |

Referring to Table 3 and FIG. 12, according to Examples 1 and 2, unlike Comparative Examples 4, 5, and 13, the maximum peak voltages ($V_{max,V1}$, $V_{max,V2}$, and $V_{max,V3}$) were observed in the above-described ranges, and the ratios of the intensities of the peaks ($I_{V2}/I_{V1}$ and $I_{V3}/I_{V1}$) fall within the above-described ranges.

**Evaluation Example 4: Evaluation on Battery Characteristics**

Characteristics of rechargeable lithium batteries prepared using the positive electrode active materials according to Examples 1 and 2 and Comparative Examples 1 to 14 were evaluated.

For initial charging and discharging, at 25 °C, the rechargeable lithium battery was initially charged under conditions of a constant current (0.1 C) and a constant voltage (4.25 V) (cut-off 0.05C), was rested for about 10 minutes and then discharged with a constant current (0.1 C) until a voltage reached 2.5 V. And the initial discharge capacity and the initial charge capacity are measured. "Efficiency (%)" is expressed as the initial discharge capacity / initial charge capacity. The average voltage was obtained by integrating an area under a discharge voltage curve (a-voltage-capacity graph) after the initial charging and discharging of the cells and then dividing the integral by discharge capacity. The cells were charged and discharged at a rate of 0.2 C/0.2 C within a voltage range of 3.0 V to 4.25 V at 25 °C to calculate energy density. The energy density was obtained by using a calculation equation of {average driving voltage (V) $\times$ capacity (Ah)/cell weight (kg)}, wherein the capacity was calculated by multiplying a positive electrode weight (g) and discharge capacity (mAh/g). Thereafter, the charging and discharging cycle was repeated 50 times at about -20 °C under about 1.0 C/1.0 C conditions. "Lifespan (%) at 50 ccl" is expressed as the discharge capacity after the 50th cycle / initial discharge capacity. Coin cells were additionally prepared, and then the batteries were initially charged at a constant current of 0.1 C and a constant voltage (4.25 V) (cut-off 0.05C), and after 10 minutes of rest, discharged up to 2.5 V at a constant current of 0.1 C and additionally charged, and then measured at -20 °C for discharge capacity. The results of evaluating the battery characteristics were listed in Table 4.

Table 4

| Classification | Charge amount (mAh/g) | Discharge amount (mAh/g) | Efficiency (%) | Capacity at -20 °C (mAh/g) | Average voltage (V) | Lifespan (%) at 50 ccl | Energy density (Wh/kg) |
|---|---|---|---|---|---|---|---|
| Example 1 | 147.5 | 137.5 | 93.2 | 100 | 3.60 | 99.7 | 495 |
| Example 2 | 151.2 | 142.1 | 94.0 | 128 | 3.60 | 100.0 | 512 |
| Comparative Example 1 | 146.1 | 136.2 | 93.2 | 96 | 3.60 | 99.1 | 490 |
| Comparative Example 2 | 147.1 | 136.8 | 93.0 | 98 | 3.60 | 99.3 | 492 |
| Comparative Example 3 | 148.0 | 138.0 | 93.2 | 102 | 3.60 | 99.5 | 497 |
| Comparative Example 4 | 150.0 | 139.0 | 92.7 | 95 | 3.56 | 99.2 | 495 |
| Comparative Example 5 | 152.0 | 140.8 | 92.6 | 90 | 3.52 | 99.1 | 496 |
| Comparative Example 6 | 150.1 | 139.7 | 93.1 | 90 | 3.60 | 96.5 | 494 |
| Comparative Example 7 | 148.9 | 138.5 | 93.0 | 91 | 3.60 | 97.4 | 490 |
| Comparative Example 8 | 148.5 | 138.3 | 93.1 | 95 | 3.60 | 97.8 | 489 |
| Comparative Example 9 | 144.5 | 132.1 | 91.4 | 82 | 3.60 | 95.1 | 476 |

(continued)

| Classification | Charge amount (mAh/g) | Discharge amount (mAh/g) | Efficiency (%) | Capacity at -20 °C (mAh/g) | Average voltage (V) | Lifespan (%) at 50 ccl | Energy density (Wh/kg) |
|---|---|---|---|---|---|---|---|
| Comparative Example 10 | 152.7 | 143.8 | 94.2 | 122 | 3.60 | 97.6 | 503 |
| Comparative Example 11 | 151.5 | 142.4 | 94.0 | 121 | 3.60 | 98.5 | 499 |
| Comparative Example 12 | 151.1 | 142.2 | 94.1 | 125 | 3.60 | 98.9 | 498 |
| Comparative Example 13 | 153.2 | 144.5 | 94.3 | 120 | 3.59 | 100.0 | 503 |
| Comparative Example 14 | 150.6 | 140.8 | 93.5 | 131 | 3.61 | 99.1 | 497 |

Referring to Table 4, it can be seen that the rechargeable batteries according to Examples 1 and 2 have high average voltages and excellent or suitable lifespan characteristics. In particular, it can be seen that the rechargeable battery according to Example 1 of the present disclosure has a similar or higher average voltage and longer lifespan to/than the rechargeable batteries according to Comparative Examples 1 to 9. It can be seen that the rechargeable battery according to Example 2 of the present disclosure has a similar or higher average voltage and longer lifespan to/than the rechargeable batteries according to Comparative Examples 10 to 14.

In one or more embodiments, the rechargeable battery according to Example 2 has a longer lifespan than the rechargeable battery according to Example 1. In addition, it can be seen that the rechargeable battery according to Example 2 has a higher charge amount than the rechargeable battery according to Example 1, and therefore, the rechargeable battery according to Example 2 has lower resistance.

A positive electrode active material according to one or more embodiments of the present disclosure may have improved mixture density (compressed density, pellet density), and improved capacity and energy density. A positive electrode active material layer according to one or more embodiments of the present disclosure may be easily bound to a positive electrode current collector with a relatively small amount of a binder. A rechargeable lithium battery according to one or more embodiments of the present disclosure may have relatively high average voltage, charge-discharge capacity, efficiency, and energy density, and have excellent or suitable lifespan characteristics (capacity retention rate).

A person of ordinary skill in the art would appreciate, in view of the present disclosure in its entirety, that each suitable feature of the various embodiments of the present disclosure may be combined or combined with each other, partially or entirely, and may be technically interlocked and operated in various suitable ways, and each embodiment may be implemented independently of each other or in conjunction with each other in any suitable manner unless otherwise stated or implied.

In the context of the present application and unless otherwise defined, the terms "use," "using," and "used" may be considered synonymous with the terms "utilize," "utilizing," and "utilized," respectively.

Further, the use of "may" when describing embodiments of the inventive concept refers to "one or more embodiments of the inventive concept." Also, the term "exemplary" is intended to refer to an example or illustration.

As used herein, the singular forms "a", "an" and "the" are intended to include the plural forms as well, unless the context clearly indicates otherwise.

A battery manufacturing device, a battery management system (BMS) device, and/or any other relevant devices or components according to embodiments of the present invention described herein may be implemented utilizing any suitable hardware, firmware (e.g. an application-specific integrated circuit), software, or a combination of software, firmware, and hardware. For example, the various components of the device may be formed on one integrated circuit (IC) chip or on separate IC chips. Further, the various components of the device may be implemented on a flexible printed circuit film, a tape carrier package (TCP), a printed circuit board (PCB), or formed on one substrate. Further, the various components of the device may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random access memory (RAM). The computer program instructions may also be stored in other non-transitory computer readable media such as, for example, a CD-ROM, flash drive, or the like. Also, a person of skill in the art should recognize that the functionality of various computing devices may be combined or integrated into a single computing device, or the functionality of a particular computing device may be distributed across one or more other computing devices without departing from the scope of the present disclosure.

Although one or more embodiments of the present disclosure have been described with reference to the accompanying drawings, it is understood that the present disclosure should not be limited to these embodiments but one or more suitable changes and modifications can be made by one ordinary skilled in the art within the scope of the present disclosure as hereinafter claimed. Therefore, one or more embodiments described above should be understood in all respects as illustrative and not limiting.

Embodiments are set out in the following clauses:

Clause 1. A rechargeable lithium battery comprising:

a positive electrode comprising a positive electrode current collector and a positive electrode active material layer on the positive electrode current collector;
a negative electrode comprising a negative electrode current collector and a negative electrode active material layer on the negative electrode current collector; and
a separator between the positive electrode and the negative electrode,
wherein a differential capacity (dQ/dV)-voltage charge graph of the rechargeable lithium battery comprises
a first charge peak (V1) at a voltage of about 3.4 V to about 4.0 V,
a first discharge peak (V2) at a voltage of about 3.4 V to about 4.0 V, and
a second charge peak (V3) at a voltage of about 4.0 V to about 4.4 V.

Clause 2. The rechargeable lithium battery of clause 1, wherein a ratio ($I_{V2}/I_{V1}$) of an intensity of the first discharge peak to an intensity of the first charge peak is about 0.986 to about 0.991.

Clause 3. The rechargeable lithium battery of clause 1 or clause 2, wherein a ratio ($I_{V3}/I_{V1}$) of an intensity of the second charge peak to an intensity of the first charge peak is about 1.17 or less.

Clause 4. The rechargeable lithium battery of any one of clauses 1 to 3, wherein an average voltage is about 3.5 V to about 3.7 V when discharged with about 0.1 C at a voltage of about 2.5 V to about 4.25 V.

Clause 5. The rechargeable lithium battery of any one of clauses 1 to 4, wherein a capacity retention rate is at least about 99% after 50 cycles of charging and discharging with a constant current of about 1.0 C at a voltage of about 2.5 V to about 4.25 V.

Clause 6. The rechargeable lithium battery of any one of clauses 1 to 5, wherein a positive electrode active material in the positive electrode active material layer comprises a first particle,

the first particle comprising a compound represented by Formula 1, and having a first average particle diameter:

$$\text{Formula 1} \qquad Li_{a1}Mn_{x1}Fe_{y1}B_{z1}PO_{4-b1}$$

wherein, in Formula 1, $0.8 \leq a1 \leq 1.2$, $0.45 \leq x1 \leq 0.55$, $0.45 \leq y1 \leq 0.55$, $0 < z1 \leq 0.05$, $0 \leq b1 \leq 0.05$, and $x1 + y1 + z1 = 1$, and

B is Mg and Ti.

## Claims

1. A positive electrode active material comprising a first particle,

the first particle comprising a compound represented by Formula 1, and having a first average particle diameter:

$$\text{Formula 1} \qquad Li_{a1}Mn_{x1}Fe_{y1}B_{z1}PO_{4-b1},$$

wherein, in Formula 1, $0.8 \leq a1 \leq 1.2$, $0.45 \leq x1 \leq 0.55$, $0.45 \leq y1 \leq 0.55$, $0 < z1 \leq 0.05$, $0 \leq b1 \leq 0.05$, and $x1 + y1 + z1 = 1$, and
B is Mg and Ti.

2. The positive electrode active material as claimed in claim 1, wherein B is a dopant, and wherein a ratio of a doping amount of Mg to a doping amount of Ti is about 0.5 to about 1.2.

3. The positive electrode active material as claimed in claim 1 or claim 2,

wherein the first particle comprises a coating layer containing carbon, and
an amount of carbon in the first particle is about 1.5 wt% to about 2.5 wt% based on a total of 100 wt% of the first particle.

4. The positive electrode active material as claimed in any one of claims 1 to 3,

wherein the first particle is a single particle, and
the first average particle diameter of the first particle is about 100 nm to about 2 $\mu$m.

5. The positive electrode active material as claimed in any one of claims 1 to 3,

wherein the first particle comprises a plurality of second particles aggregated with each other,
the first average particle diameter of the first particle is about 3 $\mu$m to about 10 $\mu$m, and
each of the plurality of second particles is a primary particle, and has a particle diameter of about 200 nm or less.

6. The positive electrode active material as claimed in claim 5, wherein the first particle has a porosity of about 20% to about 40%.

7. The positive electrode active material as claimed in claim 5 or claim 6, wherein a span value, obtained by analysis on the first particle with a particle size analyzer, is about 0.3 to about 0.75.

8. A positive electrode active material comprising a first particle,

the first particle comprising a compound represented by Formula 2, and having a first average particle diameter,
wherein the first particle is doped with Mg and Ti, with a total doping amount of Mg and Ti from about 2500 ppm to about 5000 ppm:

Formula 2        $Li_{a2}Mn_{x2}Fe_{y2}PO_{4-b2}$,

and
wherein, in Formula 2 , $0.8 \leq a2 \leq 1.2$, $0.45 \leq x2 \leq 0.55$, $0.45 \leq y2 \leq 0.55$, $0 \leq b2 \leq 0.05$, and $x2 + y2 = 1$.

9. The positive electrode active material as claimed in claim 8, wherein a doping amount of Mg is about 1000 ppm to about 2400 ppm.

10. The positive electrode active material as claimed in claim 8 or claim 9, wherein a doping amount of Ti is about 2000 ppm.

11. The positive electrode active material as claimed in any one of claims 8 to 10, wherein a ratio of a doping amount of Mg to a doping amount of Ti is about 0.5 to about 1.2.

12. The positive electrode active material as claimed in any one of claims 8 to 11,

wherein the first particle comprises a coating layer containing carbon, and
an amount of carbon in the first particle is about 1.5 wt% to about 2.5 wt% based on a total of 100 wt% of the first particle.

13. The positive electrode active material as claimed in any one of claims 8 to 12,

wherein the first particle is a single particle, and
the first average particle diameter of the first particle is about 100 nm to about 2 $\mu$m.

14. The positive electrode active material as claimed in any one of claims 8 to 13,

wherein the first particle comprises a plurality of second particles aggregated with each other,
the first average particle diameter of the first particle is about 3 $\mu$m to about 10 $\mu$m, and

each of the plurality of second particles is a primary particle and has a particle diameter of about 200 nm or less.

15. A rechargeable lithium battery comprising:

a positive electrode comprising a positive electrode current collector and a positive electrode active material layer on the positive electrode current collector;
a negative electrode comprising a negative electrode current collector and a negative electrode active material layer on the negative electrode current collector; and
a separator between the positive electrode and the negative electrode,
wherein a differential capacity (dQ/dV)-voltage charge graph of the rechargeable lithium battery comprises
a first charge peak (V1) at a voltage of about 3.4 V to about 4.0 V,
a first discharge peak (V2) at a voltage of about 3.4 V to about 4.0 V, and
a second charge peak (V3) at a voltage of about 4.0 V to about 4.4 V.

# FIG. 1

# FIG. 2

FIG. 3

# FIG. 4

# FIG. 5

FIG. 6

FIG. 7

# FIG. 8

```
        ┌─────────┐
        │  Start  │
        └────┬────┘
             │
             ▼
┌────────────────────────────────────┐
│ Mixing of precursor, lithium source,│───S100
│   carbon source, and dopant source  │
└────────────────┬───────────────────┘
                 │
                 ▼
┌────────────────────────────────────┐
│             Wet grind               │───S200
└────────────────┬───────────────────┘
                 │
                 ▼
┌────────────────────────────────────┐
│                Dry                  │───S300
└────────────────┬───────────────────┘
                 │
                 ▼
┌────────────────────────────────────┐
│            Calcination              │───S400
└────────────────┬───────────────────┘
                 │
                 ▼
┌────────────────────────────────────┐
│             Dry grind               │───S500
└────────────────┬───────────────────┘
                 │
                 ▼
            ┌─────────┐
            │   End   │
            └─────────┘
```

FIG. 9

FIG. 10

FIG. 11

# FIG. 12

Europäisches
Patentamt

European
Patent Office

Office européen
des brevets

## EUROPEAN SEARCH REPORT

**Application Number**

EP 25 16 7795

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 106 450 211 A (HEFEI GUOXUAN HIGH TECH POWER ENERGY CO LTD) 22 February 2017 (2017-02-22) | 1,3-7,15 | INV. H01M4/36 H01M4/58 |
| A | * paragraphs [0002], [0003], [0010], [0012], [0013], [0108]; figure 4; examples 1-3 * | 2,8-14 | H01M4/62 C01B25/45 |
| X | CN 117 525 390 A (QUJING DYNANONIC NANO TECH CO LTD; FOSHAN DYNANONIC TECH CO LTD) 6 February 2024 (2024-02-06) | 15 | ADD. H01M10/0525 H01M10/42 |
| A | * example 1 * | 1-14 | |
| X | CN 103 606 706 A (BEIJING NAT BATTERY TECHNOLOGY CO LTD) 26 February 2014 (2014-02-26) | 15 | |
| A | * example 1; sequences S102, S200, S300, S400 * | 1-14 | |

**TECHNICAL FIELDS SEARCHED (IPC)**

H01M

The present search report has been drawn up for all claims

| Place of search | Date of completion of the search | Examiner |
|---|---|---|
| The Hague | 23 July 2025 | Ferreira Marinha, D |

EPO FORM 1503 03.82 (P04C01)

## ANNEX TO THE EUROPEAN SEARCH REPORT
## ON EUROPEAN PATENT APPLICATION NO.

EP 25 16 7795

This annex lists the patent family members relating to the patent documents cited in the above-mentioned European search report.
The members are as contained in the European Patent Office EDP file on
The European Patent Office is in no way liable for these particulars which are merely given for the purpose of information.

23-07-2025

| Patent document cited in search report | | Publication date | Patent family member(s) | | Publication date |
|---|---|---|---|---|---|
| CN 106450211 | A | 22-02-2017 | NONE | | |
| CN 117525390 | A | 06-02-2024 | CN | 117525390 A | 06-02-2024 |
| | | | WO | 2025087231 A1 | 01-05-2025 |
| CN 103606706 | A | 26-02-2014 | NONE | | |

EPO FORM P0459

For more details about this annex : see Official Journal of the European Patent Office, No. 12/82